# EUROPÄISCHE PATENTSCHRIFT

(11) **EP 1 524 751 B1**
(45) Veröffentlichungstag und Bekanntmachung des Hinweises auf die Patenterteilung: **21.12.2005**
(21) Anmeldenummer: 04004784.7
(22) Anmeldetag: 02.03.2004
(51) Int. Cl.: H02K 5/173, H02K 3/52

(54) **Bürstenloser Elektromotor**
Brushless electric motor
Moteur électrique sans balai

(30) Priorität: 18.09.2003 DE 10343162
(43) Veröffentlichungstag der Anmeldung: 20.04.2005
(73) Patentinhaber: Leister Process Technologies, 6060 Sarnen (CH)
(72) Erfinder: Berwert, Mathias, 6055 Alpnach-Dorf (CH); Arnold, Hans, 6056 Kägiswil (CH); Aregger, Rolf, 6030 Ebikon (CH)
(74) Vertreter: Klocke, Peter

(56) Entgegenhaltungen:
- DE-A- 3 629 049
- DE-A- 4 021 599
- US-A- 4 634 908
- US-A- 4 825 114
- US-A- 5 023 925
- US-A- 6 144 135
- PATENT ABSTRACTS OF JAPAN Bd. 1999, Nr. 03, 31. März 1999 (1999-03-31) & JP 10 322962 A (TOHOKU OKI DENKI KK), 4. Dezember 1998 (1998-12-04)

## Beschreibung

Die vorliegende Erfindung betrifft einen bürstenlosen Elektromotor mit einem Rotor der innerhalb eines Stators umläuft, mit Isoliersternen, welche den Stator stirnseitig abdecken, und mit einem äußeren Statormantel, der den Stator umschließt, wobei der Rotor eine Rotorwelle aufweist, die beidseitig in Rotorlagern der Isoliersterne gelagert ist. Der Stator weist mindestens eine Statorwicklung auf, die in Nuten des Stators einliegt und die die Polschuhe des Stators sowie die Isoliersterne umgreift und über die Isoliersterne den Rotor fixiert und den Rotor mit den Rotorlagern im Stator einschließt.

Für den Dauerbetrieb von kleineren Geräten, beispielsweise Heißluftgeräten und Gebläsen, die insbesondere in der Fertigung eingesetzt werden und im Dauerbetrieb laufen müssen, sind möglichst kleine und leistungsfähige Motoren erforderlich. Bei bekannten Geräten werden sogenannte Universalmotoren eingesetzt. Durch die natürliche Abnutzung der Bürsten wie auch des Kollektors ist der Einsatz dieser Motoren beim Dauerbetrieb begrenzt. Hier bietet es sich an, eine elektronische Kommutierung einzuführen, wobei jedoch konstruktionsbedingt eine andere Motorart auch im Hinblick auf eine erhöhte Leistung bei den gleichen Abmessungen oder noch kleineren Abmessungen gewählt werden muss. Eine Möglichkeit bietet der Asynchronmotor, der jedoch in der Herstellung relativ aufwendig ist und von der Bauart her ein Volumen aufweist, das den Einbau in diesen Handgeräten bei den augenblicklichen Abmessungen nicht gestattet. Gerade für diesen Anwendungsfall wären daher Elektromotoren wünschenswert, die bei ausreichender Leistung deutlich unter einen Durchmesser von 100 mm kommen. In der Zeitschrift Schweizer Maschinen Markt (SMM) 31/32, Ausgabe 8, 2003, Seiten 149 bis 154 wird hierzu angeführt, dass alle Motortypen mit rein elektrischer Erregung, wie unter anderem Asynchronmaschinen, für Kleinantriebe unter einem Durchmesser von 100 mm ausscheiden.

Das Grundprinzip des eingangs angegebenen Elektromotors ist seit langem bekannt und in der DE-C-833 978 und DE-C-967 387 beschrieben. Es ist auch bekannt, bei Rotoren und Statoren von Elektromotoren an den beiden stirnseitigen Enden des aus einanderliegenden Blechen gebildeten Rotors oder Stators an den stimseitigen Enden einen Isolierstern vorwegzusehen (vgl. DE-38 42 800-C2 für den Rotor eines Gleichstrommotors). In der EP-0 445 367-A1 ist ein Elektromotor beschrieben, der einen Stator mit einer Mehrzahl von radial angeordneten magnetischen Polstücken aufweist. Zwischen den magnetischen Polstücken befinden sich Nuten in denen Wicklungen angeordnet sind. Ein innerhalb des Stators umlaufender Rotor weist eine Isolieranordnung zum Abdecken der Polstücke und eine Isolierabdeckung auf, die ein Teil der Stirnfläche des innerhalb des Stators umlaufenden Rotors übergreift. Die Statorwicklung wird nach Einfügen des Rotors in einen Spulenrahmen, der das Blechpaket des Stators trägt, gewickelt, so dass der Rotor nach Aufbringen der Wicklung jedoch ohne seine Lagerung in dem später anzubringenden Gehäuse miteingewickelt und nicht mehr entfembar ist. In der DE-A-40 21 599 wird ein bürstenloser Gleichstrommotor offenbart, dessen Isolierkörper sternförmig als Isoliersterne ausgeführt sind. Die Isolierkörper haben drei radiale Erweiterungen, so dass sie ein sternförmiges Bauteil bilden, welches die Wicklung vom Blechpaket des Stators isoliert. In den Isolierkörpern sind Lager für die Rotorwelle angeordnet. Die Statorwicklung umgreift die Polschuhe des Statorpakets sowie die Isoliersterne und fixiert den Rotor über die Isoliersterne am Stator, wobei der Rotor im Stator eingeschlossen wird.

Der vorliegenden Erfindung liegt die Aufgabe zugrunde, einen Elektromotor mit elektronischer Kommutierung vorzuschlagen der für den Dauerbetrieb, insbesondere von Heißluftgeräten, bei hohen Drehzahlen geeignet ist und dabei in einem Durchmesserbereich von deutlich weniger als 100 mm liegt. Der Erfindung liegt außerdem die Aufgabe zugrunde, ein Heißluftschweißgerät mit einem derartigen Motor vorzuschlagen.

Die Aufgabe wird erfindungsgemäß für den Elektromotor mit den Merkmalen des Anspruchs gelöst. Weitere vorteilhafte Ausgestaltungen sind den Unteransprüchen zu entnehmen.

Danach weist der Stator des erfindungsgemäßen Elektromotors ein rohrartiges Statorpaket mit einer zentralen Statorröhre zur Aufnahme des Rotors auf. Die Isoliersterne sind durch das Statorpaket des Stators voneinander beabstandet und weisen Haltestifte zum Anschluss der Wicklungsenden der Statorwicklung und/oder einer Leiterplatte auf. Desweiteren befindet sich an dem topfförmigen Lagersitz auf der dem Stator abgewandten Seite dieses Isoliersternes ein Träger zur Aufnahme von elektrischen Anschluss- und Schaltungselementen und/oder der Anschlüsse der Wicklungen. Damit können auf kleinstem Raum, gerade für die Unterbringung in kleineren Geräten, die für die Steuerung des Motors notwendigen elektronischen Schaltungen für die elektronische Kommutierung und sonstige Steuerung/Regelung untergebracht werden. Die Statorwicklung fixiert über die Isoliersterne den Rotor am Stator und schließt am jeweiligen stimseitigen Ende die Rotorlager und den Rotor in seiner Position im Stator ein. Damit ist nach dem Umwickeln des Stators der Rotor nicht mehr von dem Stator trennbar. Dieser Aufbau hat den Vorteil, dass die Herstellung kostengünstig durch den Einsatz bestehender Wickelsysteme, wie sie insbesondere für die Bewicklung von Innenläuferrotoren verwendet werden, eingesetzt werden können. Gleichzeitig ist ein Motor mit einem Durchmesser, der deutlich kleiner als 100 mm beträgt, jedoch für Drehzahlen in einem Bereich größer als 18.000 Umdrehungen pro Minute bei ausreichender Leistung von bis zu 200 Watt realisierbar. Größere Leistungen sind selbstverständlich bei größeren Abmessungen möglich. Diese sind jedoch bei kleineren Geräten beschränkt.

Gemäß einer vorteilhaften Ausbildung des Elektromotors ist der Rotor als Kurzschlussläufer ausgebildet, infolgedessen der Motor als Asynchronmotor funktioniert.

Gemäß einer vorteilhaften Weiterbildung des Elektromotors sind im Zentrum der Isoliersterne Lagersitze zur Aufnahme der Lager angeordnet, die vorteilhafterweise am einen Ende als Hülse zur Aufnahme eines Lagers für den Durchtritt der Rotorwelle und am anderen Ende als Topf zur Aufnahme des Lagers und axialen Ausgleichselementen ausgebildet sind. Damit wird ein Lagersitz für beliebige Lagerarten, im vorliegenden Fall für ein festes Lager und ein Loslager, mit einfachen Bauteilen realisiert. Der Isolierstern kann als Spritzgussteil in Kunststoff in der entsprechenden Ausbildung leicht hergestellt werden.

Damit der Stator in seiner zylindrischen Form gehalten werden kann, weisen vorteilhafterweise die Isoliersterne auf der den Polschuhen zugewandten Seite angrenzend an die Lagersitze Einrichtungen zum Zentrieren des Blechpakets des Stators auf. Zweckmäßigerweise handelt es sich hierbei jeweils um einen aus der Isoliersternebene hervorstehenden, um die zentrale Öffnung zur Aufnahme der Lager umlaufenden Rand, der an der Innenseite des Statorpakets eingreift und dieses bezüglich der Isoliersterne und der zentralen Achse, in der sich die Rotorwelle befindet, zentriert.

Um den Stator befindet sich in bekannter Weise der Statormantel als Joch. Dieser wird gemäß einer weiteren vorteilhaften Ausbildung über zwei stirnseitige Ringflansche, die über Schraubverbindungen miteinander verbunden sind, fixiert, wobei die Bolzen der Schraubverbindungen zwischen den beiden Ringflanschen im am Außenumfang des Statormantels angeordneten Nuten verlaufen. Durch diese zusätzlichen Maßnahmen ragen die Bolzen nur geringfügig über den Außenumfang des Statormantels heraus und reduzieren damit ebenfalls den Durchmesser des gesamten Motors.

Vorzugsweise weist der Elektromotor an der Rotorwelle mindestens ein Lüfterrad für ein Gebläse auf und ist zusammen mit dem Lüfterrad in einem Gehäuse für ein Heißluftschweißgerät integriert. Das Heißluftschweißgerät weist hierzu ein längliches Gehäuse bestehend aus einem zylindrischen Griffteil in dem der Motor und die Motorsteuerung integriert ist, einen daran anschließenden zylindrischen Bereich mit dem Gebläse, das über den Motor angetrieben wird, und daran anschließend einen im Wesentlichen zylindrischen Heizbereich auf. Das derart ausgestaltete Heißluftschweißgerät zeichnet sich durch eine gute Handhabbarkeit aus, wobei durch den besonders ausgestalteten Elektromotor eine Erhöhung der Luftmenge um ca. 30 % erreicht wurde. Bei gleichen Außenabmessungen des Motors ist ein Dauerbetrieb bei mindestens mindestens 18.000 Umdrehungen pro Minute möglich ist.

Nachfolgend wird die Erfindung anhand eines Ausführungsbeispiels in Form eines Asynchronmotors mit einem Kurzschlussläufer näher erläutert. Es stellen dar:
- Figur 1: eine perspektivische Darstellung des Stators;
- Figur 2: eine perspektivische Darstellung des Rotors;
- Figur 3: einen Isolierstern mit topfförmigem zentralen Abschnitt in perspektivischer Darstellung (Figur 3A), in einer Querschnittsdarstellung (Figur 3B) und eine vergrößerte Darstellung des umlaufenden Randes zur Zentrierung des Statorpakets (Figur 3C);
- Figur 4: die Darstellungen entsprechend der Figur 3 für einen Isolierstern mit einem hülsenförmigen zentralen Abschnitt (Figur 4A perspektivische Ansicht; Figur 4B Querschnittsdarstellung; Figur 4C Vergrößerung);
- Figur 5: die perspektivische Ansicht des Statormantels;
- Figur 6: die stirnseitige Ansicht auf den Elektromotor (Figur 6A); die Schnittdarstellung entlang der Linien A-A (Figur 6B) sowie die Vergrößerungen der beiden Lagersitze (Figur 6C bzw. Figur 6D);
- Figur 7: den Längsschnitt durch den Antriebsteil einschließlich Gebläse eines Heißluftschweißgerätes mit dem Elektromotor (Figur 7A) und die perspektivische Darstellung (Figur 7B); und
- Figur 8: die perspektivische Darstellung eines Heißluftschweißgeräts mit einem den Elektromotor darstellenden Aufschnitt.

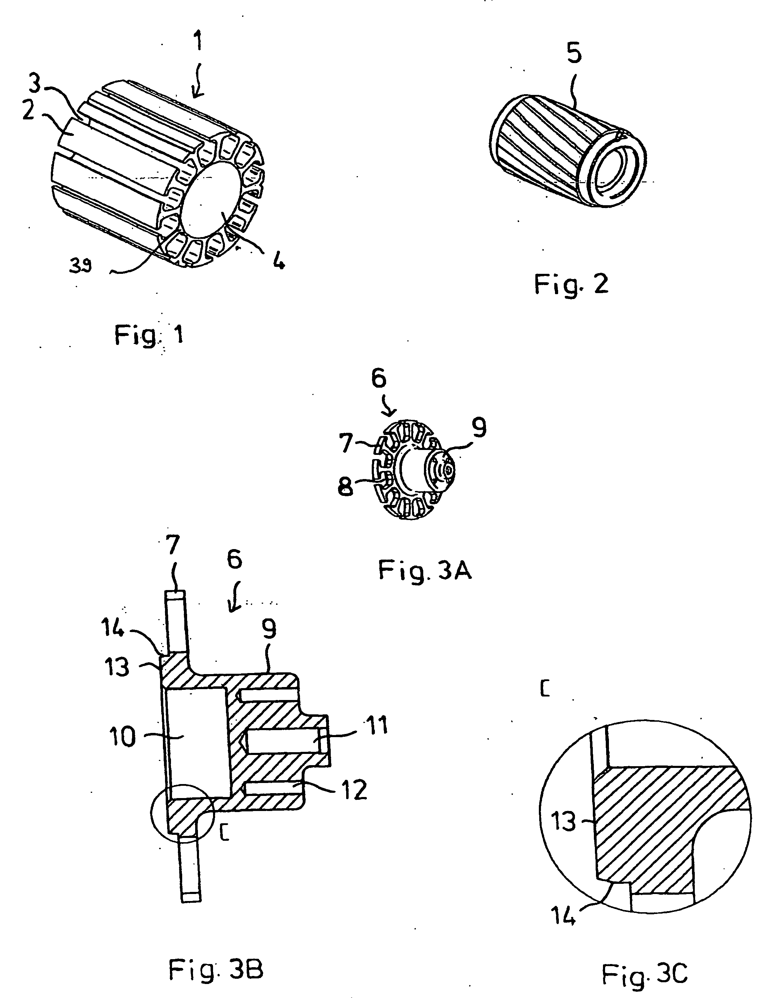

Figur 1 zeigt den im Aufbau an sich bekannten Stator 1 für eine Außenwicklung mit den Polschuhen 2 und dazwischen angeordneten Nuten 3 und einer zentralen Röhre 4 zur Aufnahme des Rotors. In üblicher Art und Weise besteht der Stator 1 aus einem Paket 39 von magnetisierbaren dünnen Blechen, die aufeinandergestapelt und miteinander verklemmt sind.

Figur 2 zeigt den Rotor 5 ohne daran normalerweise angebrachte Welle, der als sogenannter und allgemein bekannter Käfigläufer oder Kurzschlussläufer ausgebildet ist.

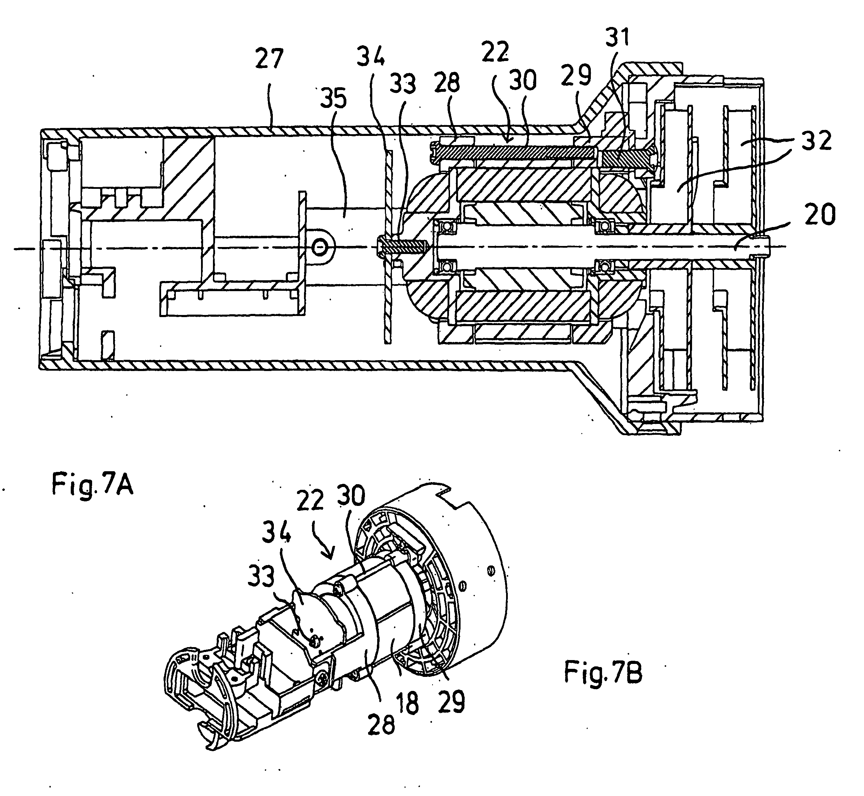

Figur 3 zeigt einen Isolierstern 6, der in an sich bekannter Weise im äußeren Bereich entsprechend der Form der Polschuhe 2 und der Nuten 3 ausgebildet ist, um an der Stirnseite des Stators 1 diese abzudecken. Entsprechend weist der Isolierstern polschuhförmige Stege 7 und Nuten 8 auf. Der Isolierstern 6 weist einen topfförmigen zentralen Abschnitt 9 auf, der in den Figuren 3A und 3B gezeigt ist. Der topfförmige Abschnitt 9 weist eine Ausnehmung 10 zur Aufnahme eines Lagers und Ausgleichselementen zur Bildung eines Loslagers auf. Der Isolierstern wird mit dieser Seite an den Stator 1 angelegt. Auf der gegenüberliegenden Seite des topfförmigen Abschnittes 9 befindet sich eine zentrale Bohrung 11 zur Aufnahme einer Befestigungsschraube für eine an dem Isolierstern 6 anbringbare Leiterplatte 34 (Figur 7) für die Elektronik und vier Bohrungen 12 für die Abringung der Enden der Wicklungen und die Kontaktierung der Leiterplatte 34. Wie aus Figur 3B und in vergrößerter Darstellung aus Figur 3C ersichtlich, weist der Isolierstern 6 auf der dem Stator 1 zugewandten Seite einen umlaufenden Rand 13 auf, der mit seiner Kante 14 in die Röhre 4 des Statorpakets 1 eingreift und dieses damit zentriert.

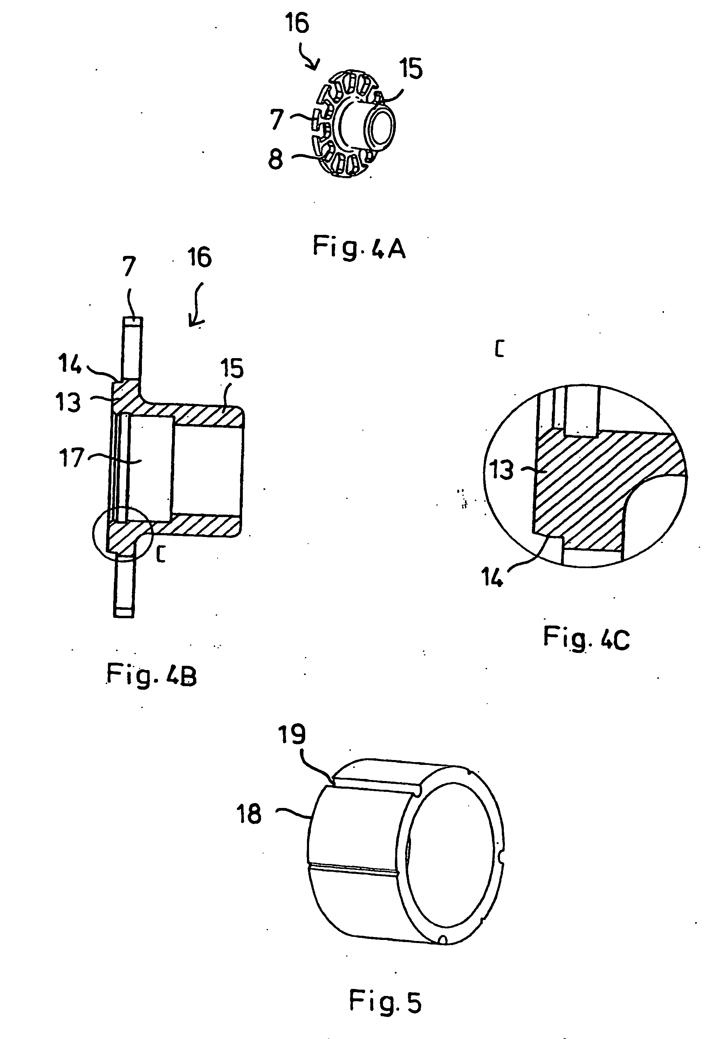

Figur 4 zeigt der Figur 3 entsprechende Darstellungen mit dem Rand 13 und der Kante 14. Hier ist der zentrale Abschnitt 15 des Isoliersterns 16 als Hülse ausgebildet, so dass die Rotorwelle hindurchtreten kann. Auf der dem Statorpaket 1 zugewandten Seite befindet sich eine im Durchmesser vergrößerte Ausnehmung 17 zur Aufnahme eines entsprechenden Festlagers.

Der Statormantel 18 in Figur 5, der ebenfalls in bekannter Art und Weise aus einer Vielzahl von miteinander verklemmten dünnen Blechringen besteht, weist an seinem Umfang Nuten 19 zur Aufnahme von Bolzen auf.

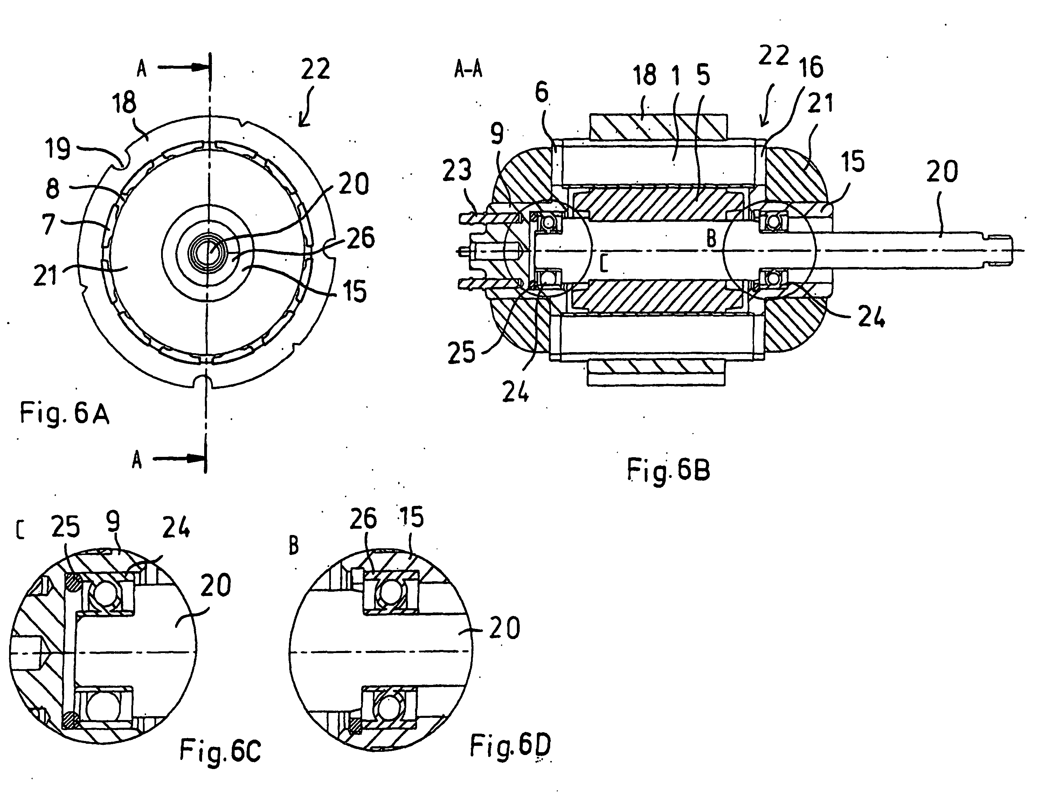

Figur 6 zeigt den vollständig zusammengebauten Elektromotor 22. In der Stirnansicht gemäß Figur 6A ist die Rotorwelle 20, die aus dem hülsenförmigen Abschnitt 15 des Isoliersterns 16 herausragt, erkennbar. Die Wicklung 21 schließt den Isolierstern 16, der nur mit seinen äußeren Enden der Stege 7 und der Nuten erkennbar ist ein. Das Ganze ist von dem Statormantel 18 umgeben.

In der Schnittdarstellung entlang der Linie A-A ist die gesamte Anordnung des Rotors 5 in dem Stator 1 gezeigt. Der Statormantel 18 umgibt den Stator 1 in dem für das Magnetfeld wirksamen Bereich des Rotors 5. In die Bohrungen 12 des Isoliersterns 6 sind Stifte 23 eingeschraubt, um die beim Wickeln die Wicklungsenden gewickelt werden und die Leiterplatte 34 kontaktiert wird.

Figur 6C zeigt in vergrößerter Darstellung das Loslager in der Ausnehmung 10 des Isoliersterns 6 mit einem üblichen Kugellager 24 und einer Ausgleichseinrichtung, wie Federring oder in diesem Ausführungsbeispiel als O-Ring 25, für den axialen Distanzausgleich. Entsprechend zeigt Figur 6D ein Lager 26, das fest in der Ausnehmung 17 fixiert ist um die Rotorwelle 20 zu lagern. Wie aus der Figur 6B ersichtlich, wird durch die Wicklung 21 über die Isoliersterne 6, 16 die Rotorwelle 20 mit dem darauf fest fixierten Rotor 5 und die Lager 24, 26 einschließt. Diese sind damit fest mit dem Stator 1 verbunden.

Figur 7 zeigt den Einbau des in Figur 6B im Schnitt dargestellten Elektromotors in einem Gehäuse 27. Der Statormantel 18 wird über stirnseitige Flanschringe 28 und 29 mittels Schraubverbindungen 30 zusammengehalten, wobei der Flanschring 29 über eine weitere Schraubverbindung 31 an dem Gehäuse 27 fixiert ist. Auf der Rotorwelle 20 befinden sich zwei Lüfterräder 32, die mittels des Motors angetrieben werden. Auf der gegenüberliegenden Seite ist mittels der zentralen Schraube 33 eine Leiterplatte 34 sowie mit den Flanschringen 28 verbundene Trägerarme 35 zum Fixieren des Motors an dem Gehäuse 27 angeordnet. In dem Ausführungsbeispiel ist die Leiterplatte 34 ohne die erforderlichen elektronischen Bauteile dargestellt.

Figur 7B zeigt die Anordnung in perspektivischer Ansicht mit der in der Nut 19 des Statormantels 18 einliegenden Schraube 30. Mit den Trägerarmen 35 wird der Elektromotor in ein bestehendes Gehäuse 27 trotz höherer Leistung und Drehzahl eingefügt und angepasst.

Die Kommutierung bei dem Motor erfolgt bürstenlos durch eine entsprechende Elektronik auf der Leiterplatte 34. Da üblicherweise derartige Geräte einen zweiphasigen Anschluss haben müssen, generiert die Elektronik in bekannter Art und Weise ein Dreiphasennetz und die entsprechende Kommutierung.

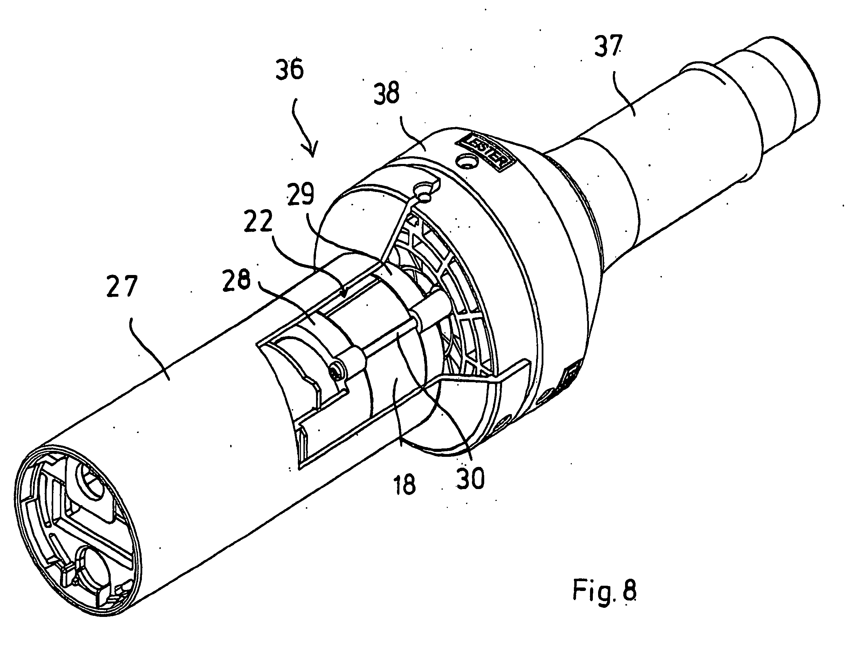

Figur 8 zeigt ein Heißluftschweißgerät 36 mit dem in Figur 7 dargestellten Gehäuseteil 27 als Griffteil mit dem daran anschließenden Gebläseteil 38 und den zylindrischen Heizbereich 37 und den darin angeordneten Elektromotor 22, von dem nur die Flanschringe 28, 29, der Statormantel 18 und eine Schraubverbindung 30 erkennbar sind.

## Patentansprüche

1. Bürstenloser Elektromotor mit einem Rotor (5), der innerhalb eines Stators (1) umläuft, wobei dieser Stator (1) eine Mehrzahl von radial angeordneten Polschuhen (2), zwischen denen Nuten (3) angeordnet sind, aufweist, mit Isoliersternen (6, 16), welche die Polschuhe (2) stirnseitig abdecken, und mit einem äußeren Statormantel (18), der den Stator (1) umschließt, wobei der Rotor (5) eine Rotorwelle (20) aufweist, die beidseitig des Rotors (5) in Rotorlagern (24, 26) der Isoliersterne (6, 16) des Stators (1) gelagert ist, und der Stator (1) mindestens eine Statorwicklung (21) aufweist, die in Nuten (3) des Stators (1) einliegt und die die Polschuhe (2) des Stators (1) sowie die Isoliersterne (6, 16) umgreift und über die Isoliersterne (6, 16) die Rotorlager (24, 26) und den Rotor (5) fixiert, und den Rotor (5) mit den Rotorlagern (24, 26) im Stator (1) einschließt, wobei
der Stator (1) ein rohrartiges Statorpaket (39) mit einer zentralen Statorröhre (4) zur Aufnahme des Rotors (5) aufweist,
die Isoliersterne (6) durch das Statorpaket (39) des Stators (1) voneinander beabstandet sind und sich nicht berühren, und
der Isolierstern (6) Haltestifte (23) zum Anschluss der Wicklungsenden der Statorwicklung (21) und/oder einer Leiterplatte (34) aufweist.

2. Bürstenloser Elektromotor nach Anspruch 1, **dadurch gekennzeichnet, dass** der Rotor (5) als Kurzschlussläufer ausgebildet ist, infolgedessen der Motor als Asynchronmotor funktioniert.

3. Bürstenloser Elektromotor nach Anspruch 1, **dadurch gekennzeichnet, dass** im Zentrum der Isoliersterne (6, 16) Lagersitze (10, 17) zur Aufnahme der Lager (24, 26) für die Rotorwelle (20) angeordnet sind.

4. Bürstenloser Elektromotor nach Anspruch 3, **dadurch gekennzeichnet, dass** die Lagersitze am einen Ende als Hülse (15) zur Aufnahme des Lagers (26) für den Durchtritt der Rotorwelle (20) und am anderen Ende als Topf (9) zur Aufnahme des Lagers (24) und axialen Ausgleichselementen (25) ausgebildet sind.

5. Bürstenloser Elektromotor nach Anspruch 4, **dadurch gekennzeichnet, dass** an dem topfförmigen Lagersitz (9) auf der dem Stator (1) abgewandten Seite dieses Isoliersternes (6) ein Träger (35) zur Aufnahme von elektrischen Anschluss- und Schaltungselementen und/oder der Wicklungsenden angeordnet sind.

6. Bürstenloser Elektromotor nach einem der vorangegangenen Ansprüche, **dadurch gekennzeichnet, dass** an den Isoliersternen (6, 16) auf der den Polschuhen (2) zugewandten Seite angrenzend an die Lagersitze Einrichtungen zum Zentrieren des Stators (1) angeordnet sind.

7. Bürstenloser Elektromotor nach Anspruch 5, **dadurch gekennzeichnet, dass** die Einrichtungen zum Zentrieren als aus der Isoliersternebene vorstehende, um eine zentrale Öffnung (10, 17) zur Aufnahme der Lager (24, 26) umlaufenden Rand (13) ausgebildet sind.

8. Bürstenloser Elektromotor nach einem der vorangegangenen Ansprüche, **dadurch gekennzeichnet, dass** der Statormantel (18) über zwei stirnseitige Flanschringe (28), die über Schraubverbindungen (30) miteinander verbunden sind, fixiert ist, wobei die Bolzen der Schraubverbindungen zwischen den beiden Flanschringen (28, 29) in am Außenumfang des Statormantels (18) angeordneten Nuten (19) verlaufen.

9. Bürstenloser Elektromotor nach einem der vorangegangenen Ansprüche, **dadurch gekennzeichnet, dass** an der Rotorwelle (20) mindestens ein Lüfterrad (32) für ein Gebläse angeordnet und die gesamte Einheit in einem Gehäuse (27) für ein Heißluftschweißgerät (36) integriert ist.

10. Heißluftschweißgerät mit einem bürstenlosen Elektromotor (22) gemäß einem der Ansprüche 1-9 und mit einem länglichen Gehäuse bestehend aus einem zylindrischen Griffteil (27) in dem der bürstelose Elektromotor (22) und die Motorsteuerung integriert ist, einem daran anschließenden Bereich (38) mit einem Gebläse (32), das über den bürstenlosen Elektromotor (22) angetrieben wird und daran anschließend einem im Wesentlichen zylindrischen Heizbereich (37).

## Claims

1. A brushless electric motor having a rotor (5) which rotates within a stator (1), this stator (1) having a plurality of radially arranged pole shoes (2) between which slots (3) are arranged, having isolating stars (6, 16) which cover the end faces of the pole shoes (2), and having an outer stator casing (18) which surrounds the stator (1), the rotor (5) having a rotor shaft (20) which is mounted on both sides of the rotor (5) in rotor bearings (24, 26) of the isolating stars (6, 16) of the stator (1), and the stator (1) having at least one stator winding (21) which is situated in slots (3) in the stator (1) and surrounds the pole shoes (2) of the stator (1) and the isolating stars (6, 16), and secures the rotor bearings (24, 26) and the rotor (5) using the isolating stars (6, 16), and encloses the rotor (5) with the rotor bearings (24, 26) in the stator (1), with
the stator (1) having a tubular stator core (39) with a central stator tube (4) for accommodating the rotor (5),
the isolating stars (6) being spaced apart from one another by the stator core (39) of the stator (1) and not touching, and
the isolating star (6) having retaining pins (23) for connection of the ends of the stator winding (21) and/or a printed circuit board (34).

2. The brushless electric motor as claimed in claim 1, wherein the rotor (5) is in the form of a squirrel-cage rotor, as a result of which the motor operates as an asynchronous motor.

3. The brushless electric motor as claimed in claim 1, wherein bearing seats (10, 17) for accommodating the bearings (24, 26) for the rotor shaft (20) are arranged in the center of the isolating stars (6, 16).

4. The brushless electric motor as claimed in claim 3, wherein the bearing seats at one end are in the form of a sleeve (15) for accommodating the bearing (26) to allow the rotor shaft (20) to pass through, and at the other end are in the form of a pot (9) for accommodating the bearing (24) and axial compensating elements (25).

5. The brushless electric motor as claimed in claim 4, wherein a support (35) for accommodating electrical connection elements and circuit elements and/or the ends of the windings is arranged on the pot-like bearing seat (9) on the side of this isolating star (6) facing away from the stator (1).

6. The brushless electric motor as claimed in one of the preceding claims, wherein devices for centering the stator (1) are arranged on the side of the isolating stars (6, 16) facing the pole shoes (2) and adjoining the bearing seats.

7. The brushless electric motor as claimed in claim 5, wherein the centering devices are in the form of a rim (13) which juts out of the plane of the isolating star and encircles a central opening (10, 17) for accommodating the bearings (24, 26).

8. The brushless electric motor as claimed in one of the preceding claims, wherein the stator casing (18) is secured by two end-face flange rings (28) which are connected to one another by screwed connections (30), the bolts of the screwed connections running between the two flange rings (28, 29) in slots (19) arranged on the outer circumference of the stator casing (18).

9. The brushless electric motor as claimed in one of the preceding claims, wherein at least one fan impeller (32) for a fan is arranged on the rotor shaft (20), and the entire unit is integrated in a housing (27) for a hot-air welding device (36).

10. A hot-air welding device having a brushless electric motor (22) as claimed in one of claims 1-9 and having an elongate housing comprising a cylindrical handle part (27) in which the brushless electric motor (22) and the motor controller are integrated, a region (38) adjoining said handle part (27) and having a fan (32) which is driven by the brushless electric motor (22), and adjoining said region (38) an essentially cylindrical heating region (37).

## Revendications

1. Moteur électrique sans balais avec un rotor (5) qui tourne à l'intérieur d'un stator (1), lequel stator (1) présente une pluralité de masses polaires (2) entre lesquelles se trouvent des encoches (3), avec des étoiles isolantes (6, 16), lesquelles recouvrent frontalement les masses polaires (2), et avec une chemise de stator (18) extérieure qui entoure le stator (1), le rotor (5) présentant un arbre de rotor (20) qui est monté de chaque côté du rotor (5) dans des roulements de rotor (24, 26) des étoiles isolantes.(6, 16) du stator (1), et le stator (1) présentant au moins un enroulement statorique (21) qui est logé dans des encoches (3) du stator (1) et qui enveloppe les masses polaires (2) du stator (1) ainsi que les étoiles isolantes (6, 16) et fixe par l'intermédiaire des étoiles isolantes (6, 16) les roulements de rotor (24, 26) et le rotor (5), et enferme le rotor (5) et les roulements de rotor (24, 26) dans le stator (1), dans lequel
le stator (1) présente un paquet statorique (39) tubulaire avec un tube de stator central (4) pour recevoir le rotor (5),
les étoiles isolantes (6) sont espacées les unes des autres par le paquet statorique (39) du stator (1) et ne se touchent pas, et
l'étoile isolante (6) présente des goupilles de fixation (23) destinées à connecter les extrémités d'enroulement de l'enroulement statorique (21) et/ou une carte de circuits imprimés (34).

2. Moteur électrique sans balais selon la revendication 1, **caractérisé par le fait que** le rotor (5) est formé comme un induit à court-circuit, en conséquence de quoi le moteur fonctionne comme un moteur asynchrone.

3. Moteur électrique sans balais selon la revendication 1, **caractérisé par le fait que** des sièges de roulement (10, 17) destinés à recevoir les roulements (24, 26) pour l'arbre de rotor (20) sont disposés au centre des étoiles isolantes (6, 16).

4. Moteur électrique sans balais selon la revendication 3, **caractérisé par le fait que** les sièges de roulement sont formés à une extrémité comme une douille (15) destinée à recevoir le roulement (26) pour le passage de l'arbre de rotor (20) et à l'autre extrémité comme un pot (9) destiné à recevoir le roulement (24) et des éléments de compensation axiaux (25).

5. Moteur électrique sans balais selon la revendication 4, **caractérisé par le fait qu'**un support (35) destiné à recevoir des éléments de connexion et de câblage électrique et/ou les extrémités d'enroulement est disposé sur le siège de roulement en forme de pot (9) du côté opposé au stator (1) de cette étoile isolante (6).

6. Moteur électrique sans balais selon l'une des revendications précédentes, **caractérisé par le fait que** des dispositifs destinés à centrer le stator (1) sont disposés au voisinage des sièges de roulement sur les étoiles isolantes (6, 16) du côté tourné vers les masses polaires (2).

7. Moteur électrique sans balais selon la revendication 6, **caractérisé par le fait que** les dispositifs de centrage sont formés d'un bord (13) dépassant du plan de l'étoile isolante, entourant une ouverture centrale (10, 17) destinée à recevoir les roulements (24, 26).

8. Moteur électrique sans balais selon l'une des revendications précédentes, **caractérisé par le fait que** la chemise de stator (18) est fixée par deux bagues de bridage (28) frontales qui sont réunies par des raccords à vis (30), les axes des raccords à vis passant entre les deux bagues de bridage (28, 29) dans des encoches (19) disposées sur la circonférence extérieure de la chemise de stator (18).

9. Moteur électrique sans balais selon l'une des revendications précédentes, **caractérisé par le fait qu'**au moins une roue de ventilateur (32) pour une soufflante est disposée sur l'arbre de rotor (20) et que tout l'ensemble est intégré dans un carter (37) pour un appareil de soudage à air chaud (36).

10. Appareil de soudage à air chaud avec un moteur électrique sans balais (22) selon l'une des revendications 1 à 9 et avec un carter allongé composé d'une pièce de préhension cylindrique (27) dans laquelle le moteur électrique sans balais (22) et la commande de moteur sont intégrés, d'une partie adjacente (38) avec une soufflante (32) qui est entraînée par le moteur électrique sans balais (22) et, à la suite de celle-ci, d'une partie chauffante (37) essentiellement cylindrique.
